# EUROPÄISCHE PATENTSCHRIFT

(11) **EP 4 375 621 B1**
(45) Veröffentlichungstag und Bekanntmachung des Hinweises auf die Patenterteilung: **09.10.2024**
(21) Anmeldenummer: 22209571.3
(22) Anmeldetag: 25.11.2022
(51) Int. Cl.: G01D 5/12, G01D 5/347

(54) **VORRICHTUNG UND VERFAHREN ZUR POSITIONS-, LÄNGEN- ODER WINKELBESTIMMUNG**
DEVICE AND METHOD FOR DETERMINING POSITION, LENGTH OR ANGLE
DISPOSITIF ET PROCÉDÉ DE DÉTERMINATION DE POSITION, DE LONGUEUR OU D'ANGLE

(43) Veröffentlichungstag der Anmeldung: 29.05.2024
(73) Patentinhaber: SICK AG, 79183 Waldkirch (DE)
(72) Erfinder: Sellmer, Christian, 78166 Donaueschingen (DE); Thomae, Dominic, 79111 Freiburg (DE)
(74) Vertreter: Manitz Finsterwald Patent- und Rechtsanwaltspartnerschaft mbB

(56) Entgegenhaltungen:
- EP-A1- 1 630 363
- WO-A1-2022/185825
- DE-A1- 102007 050 253
- DE-A1- 102012 222 319
- DE-A1- 19 803 249
- DE-C1- 19 518 664

## Beschreibung

Die Erfindung betrifft eine Vorrichtung und ein Verfahren zur Erfassung einer Position, einer Länge und/oder eines Winkels.

Geräte zur Positions-, Längen- oder Winkelbestimmung, die auch als Encoder oder Kodierer bezeichnet werden, sind Vorrichtungen, die Signale aus mechanischen Bewegungen erfassen und ausgeben können.

Dabei gibt es sowohl Geräte, die rotatorisch ausgebildet sind, also eine Drehbewegung erfassen, als auch Geräte, die linear ausgebildet sind, also eine Längsbewegung erfassen. Diese Geräte können beispielsweise optisch, magnetisch, kapazitiv oder induktiv arbeiten und so eine Position, eine Länge oder einen Winkel erfassen.

Dabei kann beispielsweise durch eine Montage, äußere Einflüsse oder eine Verstellung der Geräte eine Verschiebung einzelner Bauteile erfolgen, was zu einer Verfälschung der Erfassung führt.

Aus der Druckschrift EP 1 630 363 A1 ist ein Verfahren zum Bestimmen der Phasenlage einer Nockenwelle einer Brennkraftmaschine bekannt. Die Druckschrift DE 10 2012 222 319 A1 beschreibt eine Positionsmesseinrichtung.

Es ist eine Aufgabe der vorliegenden Erfindung, eine verbesserte Vorrichtung und ein verbessertes Verfahren zur Erfassung einer Position, einer Länge und/oder eines Winkels bereitzustellen.

Diese Aufgabe wird gelöst durch eine Vorrichtung zur Positions-, Längen- oder Winkelbestimmung, umfassend einen Sendebereich, umfassend zumindest ein Sendeelement, einen Empfangsbereich, mit mehreren Empfangselementen, einen Codierungsbereich, der ein Codewort mit vordefinierten Abschnitten umfasst, wobei der Sendebereich, der Empfangsbereich und der Codierungsbereich derart beweglich zueinander angeordnet und ausgebildet sind, dass die Empfangselemente in Abhängigkeit von der Position des Codierungsbereichs und/oder des Sendebereichs zu dem Empfangsbereich eine logische Eins oder eine logische Null empfangen.

Die Vorrichtung umfasst auch eine Auswertungseinheit, die ausgebildet ist, eine relative Position der Empfangselemente zu erfassen und eine Abweichung der relativen Position von einer Sollposition zumindest eines der Empfangselemente auszuwerten, und eine Steuereinheit, die ausgebildet ist, die Empfangselemente in Abhängigkeit von der Abweichung anzusteuern.

Die erfindungsgemäße Vorrichtung dient dabei zunächst dazu, eine Position, insbesondere eine Position der Empfangselemente, zu erfassen und auszuwerten. Insbesondere handelt es sich bei der erfindungsgemäßen Vorrichtung um eine Vorrichtung zur Längen- und/oder Winkelmessung, welche insbesondere basierend auf der zuvor erfassten Position ermittelt werden kann. Die Vorrichtung kann dabei beispielsweise als Encoder, insbesondere als Dreh- oder Winkelencoder bezeichnet werden.

Die erfindungsgemäße Vorrichtung umfasst zunächst einen Sendebereich mit zumindest einem Sendeelement. Das Sendeelement ist dabei ausgebildet ein Signal auszusenden. Dabei kann das Sendeelement optisch, magnetisch, kapazitiv oder induktiv ausgebildet sein und ein entsprechendes Signal aussenden. Im Falle eines optischen Sendelements kann es sich beispielsweise um eine Halbleiterlichtquelle, insbesondere eine LED handeln. Der Sendebereich kann insbesondere mehr als ein Sendeelement aufweisen, beispielsweise zwei, vier, acht, 16 oder 32 oder mehr Sendeelemente.

Die Vorrichtung umfasst weiter einen Empfangsbereich, mit mehreren Empfangselementen. Die Empfangselemente sind dabei ausgebildet, das von dem Sendeelement ausgesendete Signal zu empfangen. Die Empfangselemente können auch optisch, magnetisch, kapazitiv oder induktiv ausgebildet sein und ein entsprechendes Signal empfangen. Insbesondere sind die Empfangselemente korrespondierend zu dem Sendeelement ausgebildet. Im Falle eines optischen Empfangselements kann es sich beispielsweise um einen Halbleiterlichtempfänger, insbesondere eine Photodiode handeln. Der Empfangsbereich weist dabei mehrere Empfangselemente aufweisen, beispielswiese zwei, vier, acht, 16 oder 32 oder mehr Empfangselemente.

Die Vorrichtung umfasst auch einen Codierungsbereich, der ein Codewort mit vordefinierten Abschnitten umfasst und so ein Codewort bildet. Das Codewort kann dabei aus einer vordefinierten endlichen Länge aus mehreren aufeinanderfolgenden Elementen, die eine logische Eins oder eine logische Null repräsentieren, bestehen. Der Codierungsbereich kann auch optisch, magnetisch, kapazitiv oder induktiv ausgebildet sein. Insbesondere ist der Codierungsbereich korrespondierend zu dem Sendeelement und den Empfangselementen ausgebildet. Im Falle eines optischen Codierungselements ist ein Element, das eine logische Eins repräsentiert, ein Abschnitt, der lichtdurchlässig ist, und ein Element, das eine logische Null repräsentiert, ein Abschnitt der lichtundurchlässig ist, oder andersherum, das heißt ein Element, das eine logische Null repräsentiert, ist ein Abschnitt der lichtdurchlässig ist, und ein Element, das eine logische Eins repräsentiert, ist ein Abschnitt der lichtundurchlässig ist.

Beispielsweise umfasst das Codewort zumindest eine Eins und eine Null. Insbesondere umfasst das Codewort mehr als zwei Elemente, insbesondere vier, acht, neun, zehn, zwölf oder 16 Elemente, die aus aufeinanderfolgenden Einsen und Nullen bestehen. Bei dem Codewort kann es sich sowohl um ein Absolutcodewort als auch ein Relativcodewort bzw. ein Inkrementalcodewort handeln. Ebenso können mehrere Codewörter in dem Codierungsbereich angeordnet sein, die sowohl Absolutcodewörter als auch Relativcodewörter bzw. Inkrementalcodewörter umfassen.

Dabei sind der Sendebereich, der Empfangsbereich und der Codierungsbereich derart beweglich zueinander angeordnet und ausgebildet sind, dass die Empfangselemente in Abhängigkeit von der Position des Codierungsbereichs und/oder des Sendebereichs zu dem Empfangsbereich zumindest eine logische Eins oder eine logische Null empfangen.

Ein Empfangen einer logischen Eins oder einer logischen Null meint vorliegend insbesondere ein Empfangen einer von dem Sendeelement ausgesendeten und von dem Empfangselements in Abhängigkeit der Position des Codierungsbereichs empfangenen Signals, insbesondere einer Intensität, das bzw. die dann über oder unter einem Schwellenwert liegt und somit als Eins oder Null interpretiert werden kann (oder auch anders herum).

Es kann auch aus einem einzigen Element des Codeworts eine höhere Auflösung als eine binäre Auflösung, d.h. eine Eins oder eine Null empfangen bzw. diese ausgewertet werden. So kann beispielsweise unter Verwendung eines Analog-Digital-Umsetzers eine Auflösung größer 1 Bit durch Abtastung des empfangenen Signals mit einem Analog-Digital-Umsetzer mit mehr als 1 Bit ermöglicht werden.

Die Vorrichtung umfasst auch eine Auswertungseinheit, die ausgebildet ist, eine relative Position der Empfangselemente zu erfassen und eine Abweichung der relativen Position von einer Sollposition zumindest eines der Empfangselemente auszuwerten. Dabei kann beispielswese eine Sollposition eines jeden Empfangselements hinterlegt sein. Die Sollposition ist dabei vordefiniert und richtet sich insbesondere nach der Größe und/oder der Zusammensetzung der Komponenten der Vorrichtung, insbesondere des zuvor beschriebenen Sendebereichs, Empfangsbereichs und/oder Codierungsbereichs zueinander.

Beispielsweise kann durch bauliche Toleranzen der Sendebereich, der Empfangsbereich und/oder der Codierungsbereich zueinander verschwenkt oder verdreht angeordnet sein oder ein vordefinierter Abstand des Sendebereich, des Empfangsbereich und/oder des Codierungsbereichs zueinander wird unterschritten oder überschritten. Es ergibt sich somit eine Fehlausrichtung des Sendebereichs, des Empfangsbereichs und/oder des Codierungsbereichs zueinander.

Hierdurch ergibt sich, dass ein oder mehrere Empfangselemente nicht die vollständige Leistung von dem oder den Sendeelementen empfangen, wodurch eine Genauigkeit und/oder eine Reproduzierbarkeit der Positions-, Längen- oder Winkelbestimmung durch die Vorrichtung zunächst beeinträchtigt sein kann. Diese Fehlausrichtung kann die Auswertungseinheit basierend auf der Position und optional auf einer Phase und/oder einer Signalstärke des empfangenen Signals erfassen. Die Auswertungseinheit umfasst dazu eine anwendungsspezifische integrierte Schaltung (ASIC), eine feldprogrammierbare Gatteranordnung (FPGA) und/oder einen Mikrokontroller.

Die Vorrichtung umfasst auch eine Steuereinheit, die ausgebildet ist, die Empfangselemente in Abhängigkeit von der Abweichung anzusteuern. Insbesondere ist die Steuereinheit ausgebildet, diese Fehlausrichtung zumindest teilweise zu kompensieren und/oder zu korrigieren, insbesondere durch eine - im Vergleich zu einem Zustand vor der Auswertung durch die Auswertungseinheit - geänderte Ansteuerung der Empfangselemente. Ein Ansteuern kann vorliegend insbesondere ein Beaufschlagen und/oder Nichtbeaufschlagen mit Spannung eines oder mehrerer der Empfangselemente umfassen. Alternativ oder zusätzlich können die Empfangselemente auch über eine Schaltungstechnik, wie beispielsweise eine Multiplexer angesteuert werden. Ausgestaltungen des Ansteuerns werden im Zusammenhang mit den folgenden Ausführungsformen näher erläutert werden.

Durch diese erfindungsgemäße Vorrichtung ist es somit möglich, Fehlausrichtungen von Sendebereich, Empfangsbereich und/oder Codierungsbereich zueinander zu erkennen und zumindest teilweise zu kompensieren. Insbesondere ist es durch die erfindungsgemäße Vorrichtung möglich, die Leistung und insbesondere die Genauigkeit der Vorrichtung im Betrieb zu optimieren und die Funktion auf die baulichen Gegebenheiten der einzelnen Bereiche der Vorrichtung zueinander anzupassen.

Durch die erfindungsgemäße Vorrichtung wird somit eine Lösung bereitgestellt, die insbesondere bei einer Winkelbestimmung die Nutzung von verschiedenen Radien ermöglicht, denn die durch die verschiedenen Radien hervorgerufene optische Verschiebung kann durch die erfindungsgemäße Vorrichtung kompensiert werden.

Weiter werden insbesondere für Inkrementalencoder der Photodiodenstrom und damit auch die Signaleindeutigkeit erhöht. Insbesondere für Absolutencoder wird die Flankensteilheit verbessert und damit der Toleranzbereich erhöht.

Gemäß einer Ausführungsform umfasst das Ansteuern der Empfangselemente ein Abschalten zumindest eines Empfangselements, insbesondere mehrerer nebeneinander angeordneter Empfangselemente. Hierdurch wird eine besonders einfache Kompensation ermöglicht.

Gemäß einer Ausführungsform umfasst das Ansteuern der Empfangselemente ein Wechseln von einem Empfangselement auf ein anderes Empfangselement, insbesondere auf ein benachbartes Empfangselement. Ein Wechseln meint vorliegend insbesondere ein Wechsel der Ansteuerung von einem Empfangselement auf ein anderes Empfangselement. Beispielsweise wird zunächst das eine Empfangselement angesteuert und, wenn eine Abweichung erfasst wird, das andere, insbesondere benachbartes Empfangselement angesteuert und das eine Empfangselement nicht mehr angesteuert. Hierdurch wird eine besonders genaue Kompensation ermöglicht.

Gemäß einer Ausführungsform umfasst zumindest ein Empfangselement zwei voneinander getrennte Empfangsabschnitte, wobei das Ansteuern der Empfangselemente ein Anschalten und/oder ein Abschalten eines Empfangsabschnitts umfasst.

Insbesondere umfasst jedes Empfangselement zumindest zwei voneinander getrennte Empfangsabschnitte. Ein Empfangsabschnitt ist ein Teil des Empfangselement, der einzeln und unabhängig von dem anderen Empfangsabschnitt angesteuert werden kann. Hierdurch wird eine besonders genaue Kompensation ermöglicht.

Gemäß einer Ausführungsform ist ein erster Empfangsabschnitt im Randbereich des Empfangselements angeordnet.

Insbesondere sind ein erster Empfangsabschnitt, ein zweite Empfangsabschnitt, ein dritter Empfangsabschnitt im Randbereich eines bzw. aller Empfangselemente angeordnet, beispielsweise an vier Rändern bzw. Kanten eines Rechtecks oder Quadrats oder in vier Quadranten im Randbereich eines Kreises bzw. an dessen Umfang. Zusätzlich kann ein weiterer zentraler Empfangsabschnitt innerhalb des Randbereichs angeordnet sein.

Hierdurch wird eine besonders flexible Kompensation ermöglicht.

Gemäß einer Ausführungsform beträgt der erste Empfangsabschnitt eine Empfangsfläche von 10% oder weniger, insbesondere von 5% oder weniger von der gesamten Fläche des Empfangselements. Insbesondere beträgt die Fläche jedes Empfangsabschnitts weniger als 10%, insbesondere weniger als 5% der Gesamtfläche. Mit anderen Worten kann ein zentraler Empfangsabschnitt 60% oder mehr der Gesamtfläche einnehmen.

Hierdurch wird eine besonders verlustarme Kompensation ermöglicht.

Gemäß einer Ausführungsform weist der erste Empfangsabschnitt eine im Wesentlichen dreieckige Empfangsfläche auf. Insbesondere kann der erste Empfangsabschnitt als ein gekrümmtes und/oder abgerundetes Dreieck ausgebildet sein, wie beispielsweise ein Kreissektor. Weiter insbesondere ist der erste Empfangsabschnitt derart geformt, dass er keinen rechten Winkel aufweist.

Dies ist insbesondere der Fall für eine im Wesentlichen rechteckige oder quadratische und/oder gekrümmt-rechteckige oder gekrümmt quadratische Form des Empfangselements. Dabei können insbesondere die Ankathete und die Gegenkathete der dreieckigen Empfangsfläche entlang einer Außenkante des Empfangselements angeordnet sein bzw. mit dieser zusammenfallen.

Hierdurch wird eine besonders genaue Kompensation ermöglicht.

Die Eingangs genannte Aufgabe wird ebenfalls gelöst durch ein Verfahren gemäß Anspruch 12.

Bezüglich der Ausführungsformen des Verfahrens und deren Vorteile wird auf die oben in Bezug auf die Vorrichtung erläuterten Ausführungsformen und deren Vorteile verwiesen.

Ausführungsformen der Vorrichtung und des Verfahrens zur Erfassung einer Position werden nun im Zusammenhang mit den folgenden Figuren näher erläutert. Es zeigen:
- Fig. 1: eine schematische Ansicht einer Ausführungsform einer Vorrichtung zur Positions-, Längen- oder Winkelbestimmung;
- Fig. 2: eine perspektivische Ansicht einer Ausführungsform einer Vorrichtung zur Positions-, Längen- oder Winkelbestimmung gemäß Fig. 1;
- Fig. 3: eine Detailansicht einer Ausführungsform einer Vorrichtung zur Positions-, Längen- oder Winkelbestimmung gemäß Fig. 2;
- Fig. 4: eine Detailansicht einer alternativem Ausführungsform einer Vorrichtung zur Positions-, Längen- oder Winkelbestimmung gemäß Fig. 2
- Fig. 5: eine perspektivische Ansicht einer alternativen Ausführungsform einer Vorrichtung zur Positions-, Längen- oder Winkelbestimmung gemäß Fig. 1;
- Fig. 6: eine Detailansicht einer Ausführungsform einer Vorrichtung zur Positions-, Längen- oder Winkelbestimmung gemäß von Fig. 4; und
- Fig. 7: eine Ausführungsform eines Verfahrens zur Positions-, Längen- oder Winkelbestimmung.

Dabei bezeichnen gleiche Bezugszeichen gleiche oder ähnliche Merkmale.

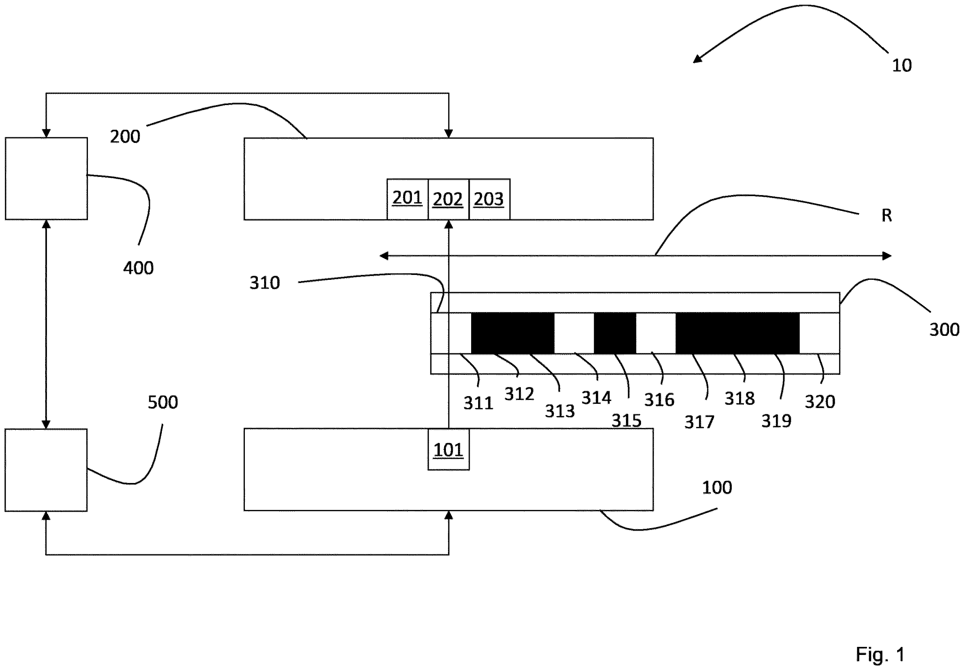

Fig. 1 zeigt eine schematische Ansicht einer Ausführungsform einer Vorrichtung 10 zur Positions-, Längen- oder Winkelbestimmung.

Die Vorrichtung 10 umfasst zunächst einen Sendebereich 100 mit zumindest einem Sendeelement 101. Das Sendeelement 101 ist hier beispielhaft als optisches Sendelement 101 gezeigt.

Die Vorrichtung 10 umfasst auch einen Empfangsbereich 200, mit mehrere Empfangselementen, wovon in der Fig. 1 aus Gründen der Übersichtlichkeit lediglich drei Empfangselemente 201, 202 und 203 abgebildet sind, die beispielhaft als Photodioden ausgebildet sind.

Die Vorrichtung 10 umfasst auch einen Codierungsbereich 300, der ein Codewort 310 mit vordefinierten Abschnitten umfasst, wobei beispielhaft ein Codewort 310 mit insgesamt zehn Codierungsabschnitten 311 bis 320 gezeigt sind. Jeder der Codierungsabschnitte 311 bis 320 stellt entweder eine logische Eins oder eine logische Null dar. Beispielhaft sind hier die Codierungsabschnitte 311, 314, 316 und 320 als lichtdurchlässig gezeigt und die Codierungsabschnitte 312, 313, 315, 317, 318 und 319 als weniger oder gar nicht lichtdurchlässig gezeigt.

Dabei sind der Sendebereich 100, der Empfangsbereich 200 und der Codierungsbereich 300 derart beweglich entlang einer Richtung R zueinander angeordnet und ausgebildet, sodass die Empfangselemente 201, 202 und 203 in Abhängigkeit von der Position des Codierungsbereichs 300 und des Sendebereichs 100 zu dem Empfangsbereich 200 eine logische Eins oder eine logische Null empfangen. Dabei ist beispielhaft gezeigt, dass in der gegenwärtigen Position, ein von dem Sendeelement 101 ausgesandtes Licht, das durch den lichtdurchlässigen Codierungsabschnitt 311 durchscheint, von dem Empfangselement 202 empfange und als logische Eins erfasst wird. Bei einer Position, in der der zweite Codierungsabschnitt 312 zwischen Sendeelement 101 und Empfangselement 202 positioniert ist, würde dementsprechend eine logische Null empfangen werden.

Die Vorrichtung 10 umfasst auch eine Auswertungseinheit 400, die ausgebildet ist, eine relative Position der Empfangselemente 201, 202, 203 zu erfassen und eine Abweichung der relativen Position von einer Sollposition zumindest eines der Empfangselemente 201, 202, 203 zu erfassen und auszuwerten.

Die Vorrichtung 10 umfasst auch eine Steuereinheit 500, die ausgebildet ist, die Empfangselemente 201, 202, 203 in Abhängigkeit von der zuvor erfassten Abweichung anzusteuern.

Das Ansteuern der Empfangselemente 201, 202, 203 kann dabei ein Abschalten zumindest eines Empfangselements 202, insbesondere mehrerer nebeneinander angeordneter Empfangselemente 202, 203 umfassen.

Alternativ oder zusätzlich kann das Ansteuern der Empfangselemente 201, 202, 203 ein Wechseln von einem Empfangselement 202 auf ein anderes Empfangselement 203, insbesondere auf ein benachbartes Empfangselement 203 umfassen.

Das Auswerten der Abweichung kann dabei ein Auswerten einer Phase und/oder einer Signalstärke des empfangenen Signals umfassen.

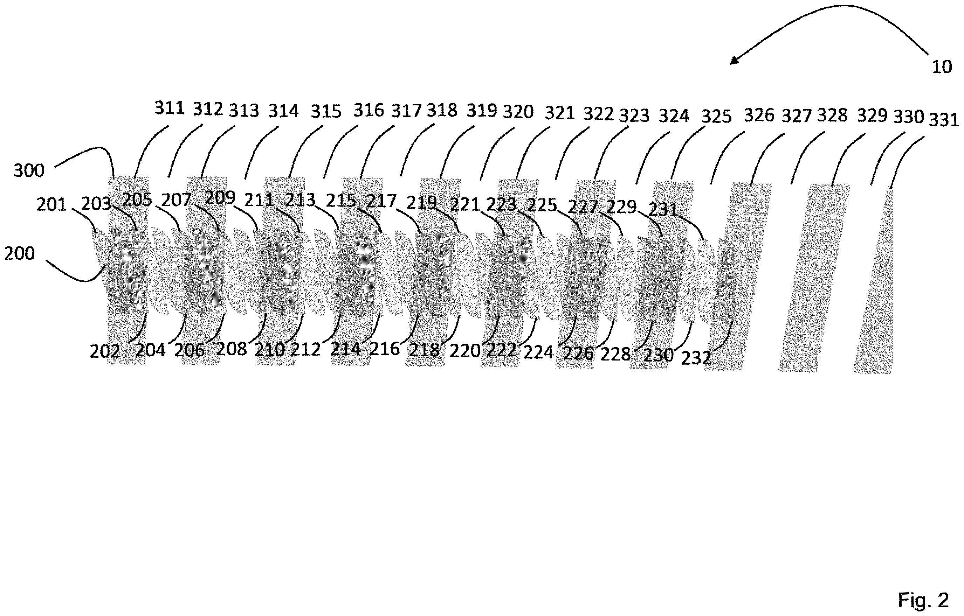

Verschiedene Arten der Ansteuerung werden nun im Zusammenhang mit den folgenden Fig. 2 bis 6 beschrieben.

Fig. 2 zeigt eine perspektivische Ansicht einer Ausführungsform einer Vorrichtung 10 zur Positions-, Längen- oder Winkelbestimmung gemäß Fig. 1.

Dabei sind abweichend zu Fig. 1 insgesamt 32 Empfangselemente 201 bis 232 abgebildet. Diese Empfangselemente 201 bis 232 sind dabei beispielhaft langgesstreckt und mit abgerundeten Ecken ausgebildet. Dabei bilden immer vier Empfangselemente (jedes vierte) eine Gruppe, die jeweils 90° einer Phase empfangen bzw. auswerten um eine Position und insbesondere einen Winkel zu ermitteln.

Es werden also zunächst die Empfangselemente 201, 205, 209, 213, 217, 221, 225 und 229 gleichzeitig angesteuert, dann die Empfangselemente 202, 206, 210, 214, 218, 222, 226 und 230 gleichzeitig, dann die Empfangselemente 203, 207, 211, 215, 219, 223, 227 und 231 gleichzeitig und dann die Empfangselemente 204, 208, 212, 216, 220, 224, 228 und 232 gleichzeitig, um die Position bzw. den Winkel zu ermitteln.

Ebenfalls abweichend zu Fig. 1 sind insgesamt 21 Codeabschnitte 311 bis 331 des Codierungsbereichs abgebildet, die das Codewort bilden, und die sich in ihrer Durchlässigkeit abwechseln, also alle ungeraden Codeabschnitte eine logische Null erzeugen und alle gerade Codeabschnitte eine logische Eins erzeugen. Bei dem gezeigten Codewort handelt es sich insbesondere um ein Inkrementalcodewort bzw. um ein Codewort eines Inkrementalencoders.

Nicht abgebildet sind in dieser Fig. 2 aus Gründen der Übersichtlichkeit der Sendebereich, die Auswertungseinheit und die Steuereinheit, wie in Fig. 1 gezeigt.

Wie in Fig. 2 zu erkennen ist, sind die Codeabschnitte 311 bis 331 zu den Empfangselemente 201 bis 231 geneigt bzw. gekippt, sodass insbesondere die Codeabschnitte von 320 bis 331 nicht mehr vollständig mit den jeweiligen Empfangselementen ausgerichtet sind. Insbesondere sind, während in den Codeabschnitten 312, 314, 316 und 318 noch der überwiegende Teil der Fläche der dazugehörigen Empfangselemente aus der vierten Gruppe, d.h. die Empfangselemente 204, 208, 212 und 216 von dem durchlässigen Bereich erfüllt sind, also eine Eins noch überwiegend wahrscheinlich erkannt werden kann, in den darauffolgenden Codeabschnitten 320, 322, 324 und 326 aufgrund der Fehlausrichtung die Empfangselemente aus der vierten Gruppe 220, 224, 228 und 232 bereits deutlich oder sogar überwiegend von den undurchlässigen Bereichen, d.h. den danebenliegenden Codeabschnitten 321, 323, 325 und 327 verdeckt, sodass eine Eins nicht mehr sicher erkannt werden kann.

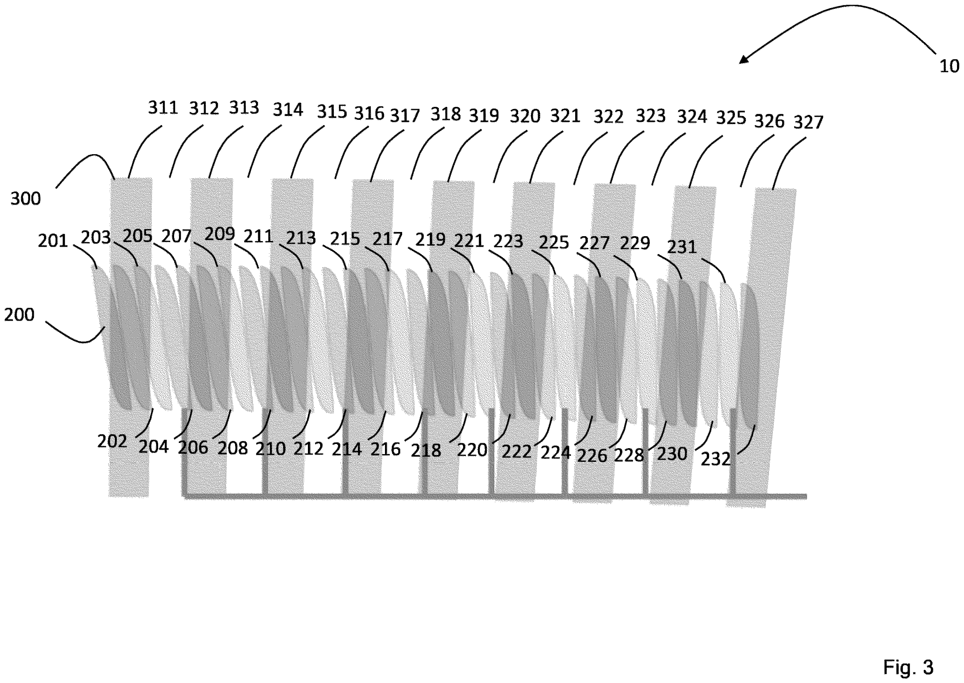

Diese Positionsabweichung kann von der Auswertungseinheit erkannt werden und die Steuereinheit kann diese Fehlausrichtung sodann kompensieren, indem sie die Empfangselemente anders ansteuert, wie dies in der folgenden Fig. 3 gezeigt ist.

Fig. 3 zeigt eine Detailansicht einer Ausführungsform einer Vorrichtung zur Positions-, Längen- oder Winkelbestimmung 10 gemäß Fig. 2.

Dabei ist in Fig. 3 nur der Abschnitt der ersten 17 Codeabschnitte von 311 bis 327 aus Fig. 2 gezeigt.

Dabei ist sichtbar, dass die vierten Empfangselemente 204, 208, 212 und 216 aus der ersten, zweiten, dritten und vierten Gruppe, die, wie im Zusammenhang mit Fig. 2 beschrieben, noch ausreichend in dem jeweiligen Codeabschnitt 312, 314, 316 und 318 angeordnet sind, zusammen mit den dritten Empfangselementen 219, 223, 227 und 231 angesteuert werden, die dann ebenfalls ausreichend in dem jeweiligen Codeabschnitt 320, 322, 324 und 326 angeordnet sind, wie dies über die schematisch dargestellte Verschaltung dargestellt wird.

Mit anderen Worten wurden für insgesamt vier Empfangselemente 220, 224, 228 und 232 aus vier aufeinanderfolgenden Gruppen die Verschaltung derart geändert, dass diese zum Auslesezeitpunkt nicht mehr angesteuert werden, also abgeschaltet werden, und im Gegensatz dazu die jeweils benachbarten vier Empfangselemente 219, 223, 227 und 231 aus derselben Gruppe angesteuert werden, diese also angeschaltet werden, um die Fehlausrichtung zu kompensieren.

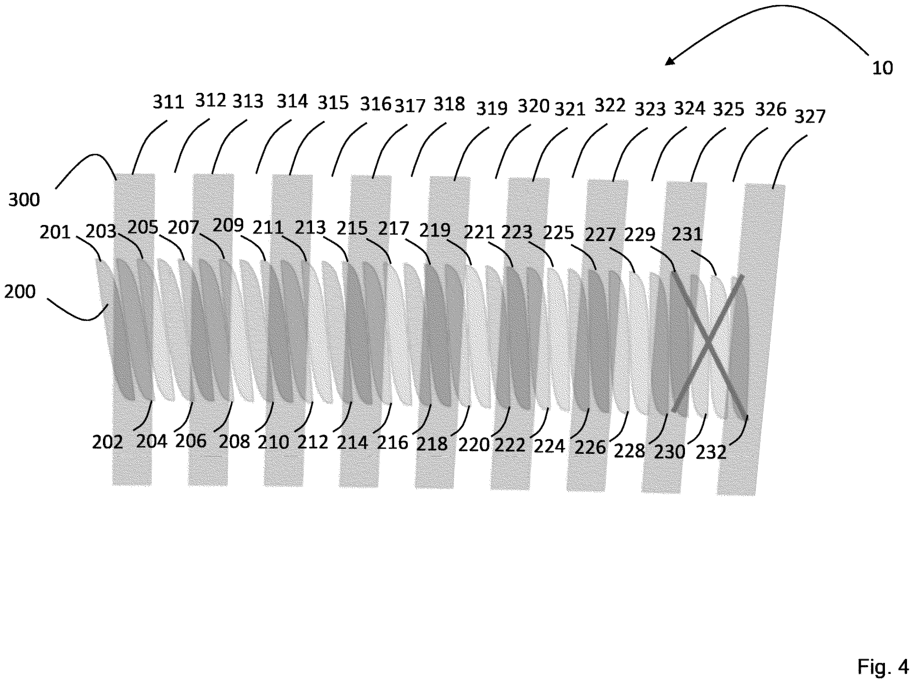

Fig. 4 zeigt eine alternative Detailansicht einer Ausführungsform einer Vorrichtung zur Positions-, Längen- oder Winkelbestimmung 10 gemäß Fig. 2 bzw. gemäß Fig. 3.

Dabei ist ersichtlich, dass die letzte der acht Gruppen, nämlich die Gruppe bestehend aus den vier nebeneinander angeordneten Empfangselementen 229, 230, 231 und 232 gar nicht mehr angesteuert wird bzw. abgeschaltet wird, um so eine Fehlerkennung zu vermeiden und die Fehlausrichtung zu kompensieren.

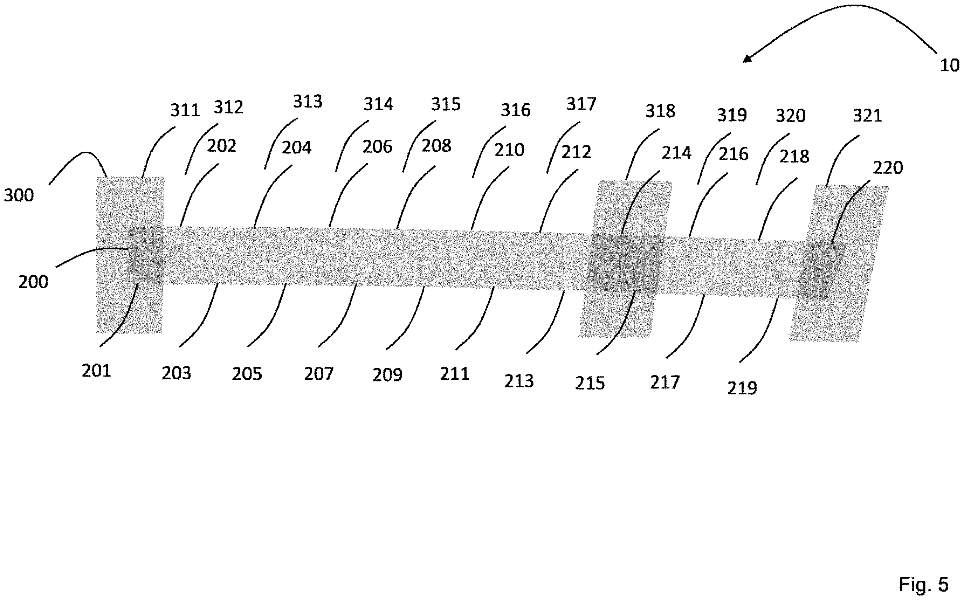

Fig. 5 zeigt eine perspektivische Ansicht einer alternativen Ausführungsform einer Vorrichtung 10 zur Positions-, Längen- oder Winkelbestimmung gemäß Fig. 1.

Dabei sind abweichend zu Fig. 1 insgesamt 20 Empfangselemente 201 bis 220 abgebildet, die eine im Wesentlichen rechteckige Form aufweisen.

Ebenfalls abweichend zu Fig. 1 sind insgesamt 11 Codeabschnitte 311 bis 321 des Codierungsbereichs abgebildet, die das Codewort bilden, und die in ihrer Durchlässigkeit unterschiedlich ausgebildet sind. So sind beispielhaft die Codeabschnitte 311, 318 und 321 als undurchlässig, also eine Null erzeugend, und die Codeabschnitte 312, 313, 314, 315, 316, 317, 319 und 320 als durchlässig, also eine Eins erzeugend, abgebildet. Bei dem gezeigten Codewort handelt es sich insbesondere um ein Absolutcodewort bzw. um ein Codewort für einen Absolutcodierer

Nicht abgebildet sind auch in dieser Fig. 5 aus Gründen der Übersichtlichkeit der Sendebereich, die Auswertungseinheit und die Steuereinheit, wie in Fig. 1 gezeigt.

Wie in Fig. 5 zu erkennen ist, sind die Empfangselemente insbesondere ab Empfangselemente 210 aufsteigend und die Codeabschnitte ab 316 aufsteigend geneigt bzw. gekippt, sodass insbesondere die Codeabschnitte von 316 bis 321 nicht mehr vollständig mit den jeweiligen Empfangselementen 210 bis 220 ausgerichtet sind, sodass eine Null oder Eins nicht mehr sicher erkannt werden kann.

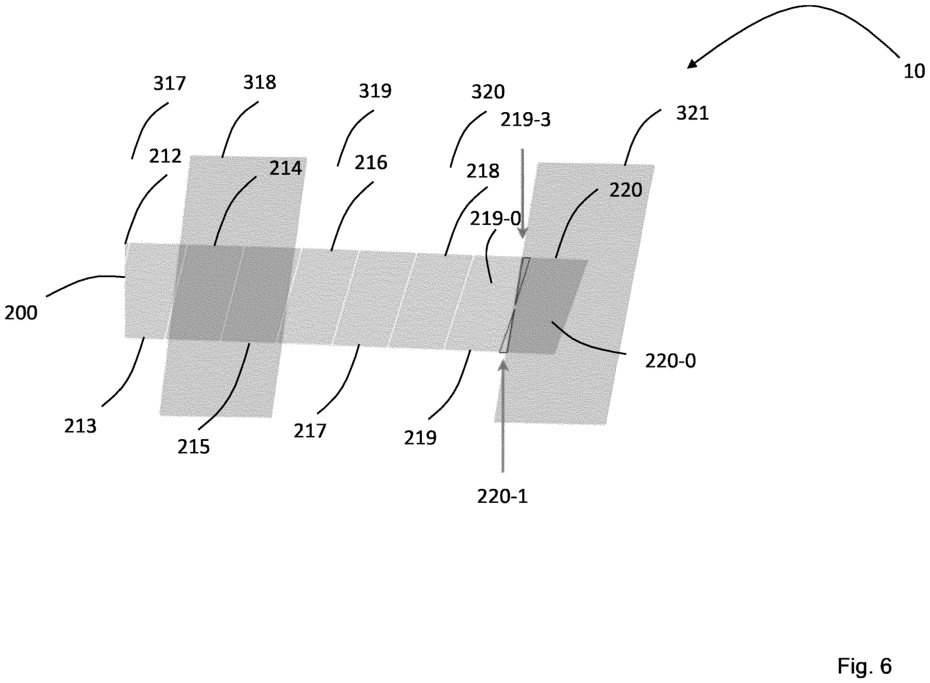

Diese Positionsabweichung kann von der Auswertungseinheit erkannt werden und die Steuereinheit kann diese Fehlausrichtung sodann kompensieren, indem sie die Empfangselemente anders ansteuert, wie dies in der folgenden Fig. 6 gezeigt ist.

Fig. 6 zeigt eine Detailansicht einer Ausführungsform einer Vorrichtung zur Positions-, Längen- oder Winkelbestimmung 10 gemäß Fig. 5.

Dabei ist in Fig. 6 beispielhaft nur der Abschnitt der letzten fünf Codeabschnitte von 317 bis 321 und der letzten neun Empfangselemente 212 bis 220 aus Fig. 5 gezeigt.

Dabei ist sichtbar, dass die letzten Empfangselemente 219 und 220 beispielhaft in mehrere Empfangsabschnitte unterteilt sind. So weist das Empfangselement 220 einen ersten Empfangsabschnitt 220-1, der am unteren linken Randbereich bzw. in der unteren linken Ecke angeordnet ist, und einen zentralen Empfangsabschnitt 220-0, der den überwiegenden Teil der Fläche des Empfangselements 220 einnimmt.

Ebenso ist das Empfangselement 219 derart dargestellt, dass es einen Empfangsabschnitt 219-3 im Randbereich aufweist sowie einen zentralen Empfangsabschnitt 219-0, der den überwiegenden Teil der Fläche des Empfangselements 219 einnimmt.

Sowohl der Empfangsabschnitt 220-1 im Randbereich des Empfangselements 220 als auch der Empfangsabschnitt 219-3 im Randbereich des Empfangselements 219 sind dabei im Wesentlichen dreieckig, insbesondere in Form eines Kreissektors ausgebildet. Insbesondere sind der Empfangsabschnitt 220-1 und der Empfangsabschnitt 219-3 korrespondierend zueinander aufgebaut.

Dabei versteht es sich, dass jedes der Empfangselemente 212 bis 220 zumindest einen, insbesondere vier Empfangsabschnitte in den Randbereichen sowie einen zentralen Empfangsabschnitt aufweisen kann. Insbesondere sind an jeder Ecke jedes Empfangselements ein jeweiliger dreieckiger Empfangsabschnitt angeordnet, die sich im Wesentlichen entlang einer horizontalen Mittelachse des Empfangselements treffen, entlang einer vertikalen Mittelachse des Empfangselements jedoch voneinander beabstandet sind. Weiter insbesondere ist der jeweilige zentrale Empfangsabschnitt somit rautenstumpfförmig ausgebildet.

Diese Empfangsabschnitte im Randbereich können von der Steuereinheit abweichend angesteuert werden. Insbesondere kann beispielsweise der Empfangsabschnitt 220-1 im Randbereich des Empfangselements 220 zusammen mit dem Empfangselement 219 und nicht zusammen mit dem zentralen Empfangsabschnitt 220-0 angesteuert werden und/oder der Empfangsabschnitt 219-3 im Randbereich des Empfangselements 219 zusammen mit dem Empfangselement 220 und nicht zusammen mit dem zentralen Empfangsabschnitt 219-0 angesteuert werden, um eine Position zu erfassen.

Es versteht sich, dass die Ausführungsbeispiele wie in Fig. 5 und 6 gezeigt mit denjenigen wie in Fig. 2, 3 und 4 gezeigt, kombiniert werden können. Insbesondere können auch die gezeigten Empfangselemente aus Fig. 2, 3 und 4 in mehrere Empfangsabschnitte unterteilt sein. Ebenso können einige, insbesondere vollständige benachbarte Empfangselemente aus Fig. 5 und 6 an-, um- bzw. abgeschaltet werden.

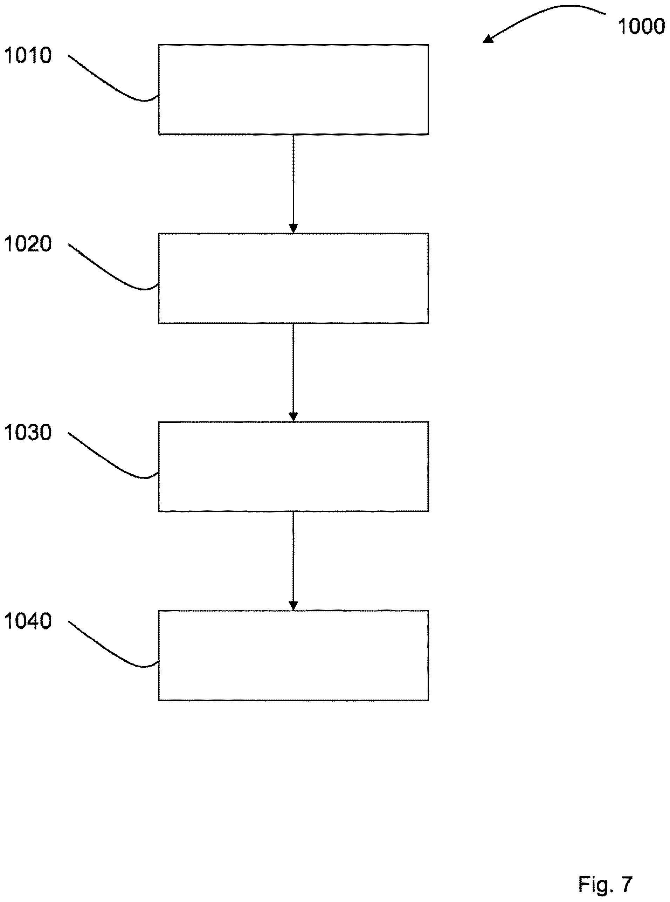

Fig. 7 zeigt eine Ausführungsform eines Verfahrens 1000 zur Positions-, Längen- oder Winkelbestimmung.

Das Verfahren 1000 beginnt in einem ersten Schritt 1010, in dem ein Sendebereich, ein Empfangsbereich und/oder ein Codierungsbereich einer Vorrichtung derart zueinander bewegt werden, dass Empfangselemente des Empfangsbereich in Abhängigkeit von der Position des Codierungsbereichs und/oder des Sendebereichs zu dem Empfangsbereich eine logische Eins oder eine logische Null empfangen.

Das Verfahren 1000 fährt fort mit dem Schritt 1020, in dem eine relativen Position der Empfangselemente erfasst wird.

Das Verfahren fährt fort mit dem Schritt 1030, in dem eine Abweichung der relativen Position von einer Sollposition zumindest eines der Empfangselemente erfasst wird.

Das Verfahren 1000 fährt fort mit dem Schritt 1040, in dem die Empfangselemente in Abhängigkeit von der Abweichung angesteuert werden.

Das Verfahren 1000 kann auch einen nicht abgebildeten Initialschritt vor dem Schritt 1010 umfassen, in dem eine wie im Zusammenhang mit einer der Fig. 1 bis 6 beschriebene Vorrichtung bereitgestellt wird.

Durch die zuvor beschriebenen Ausführungsformen der Vorrichtung und des Verfahrens wird es insbesondere ermöglicht, dass die nutzbare Fläche der Empfangselemente optimiert wird, insbesondere bei der Nutzung von unterschiedlichen Radien, ohne einen signifikanten Flächenmehrverbrauch zu erzeugen. Hierdurch werden auch die Herstellungskosten reduziert.

Ebenso wird es durch die zuvor beschriebenen Ausführungsformen der Vorrichtung und des Verfahrens insbesondere ermöglicht, dass die Signalform des empfangenen Signals im Gegensatz zu herkömmlichen Vorrichtungen und Verfahren optimiert wird, insbesondere die Oberschwingungen reduziert werden, wenn unterschiedliche Radien verwendet werden.

Auch wird es durch die zuvor beschriebenen Ausführungsformen der Vorrichtung und des Verfahrens insbesondere ermöglicht, dass die Signalform des empfangenen Signals bei einer Grob- und Feinabtastung bei Nutzung nur eines Codeworts optimiert wird, wenn unterschiedliche Radien verwendet werden.

### Bezugszeichen

- 10: Vorrichtung
- 100: Sendebereich
- 101: Sendeelement
- 200: Empfangsbereich
- 201: Empfangselement
- 202: Empfangselement
- 203: Empfangselement
- 204: Empfangselement
- 205: Empfangselement
- 206: Empfangselement
- 207: Empfangselement
- 208: Empfangselement
- 209: Empfangselement
- 210: Empfangselement
- 211: Empfangselement
- 212: Empfangselement
- 213: Empfangselement
- 214: Empfangselement
- 215: Empfangselement
- 216: Empfangselement
- 217: Empfangselement
- 218: Empfangselement
- 219: Empfangselement
- 219-0: Empfangsabschnitt
- 219-3: Empfangsabschnitt
- 220: Empfangselement
- 220-0: Empfangsabschnitt
- 220-1: Empfangsabschnitt
- 221: Empfangselement
- 222: Empfangselement
- 223: Empfangselement
- 224: Empfangselement
- 225: Empfangselement
- 226: Empfangselement
- 227: Empfangselement
- 228: Empfangselement
- 229: Empfangselement
- 230: Empfangselement
- 231: Empfangselement
- 232: Empfangselement
- 300: Codierungsbereich
- 310: Codewort
- 311: Codewortabschnitt
- 312: Codewortabschnitt
- 313: Codewortabschnitt
- 314: Codewortabschnitt
- 315: Codewortabschnitt
- 316: Codewortabschnitt
- 317: Codewortabschnitt
- 318: Codewortabschnitt
- 319: Codewortabschnitt
- 320: Codewortabschnitt
- 400: Auswertungseinheit
- 500: Steuereinheit
- 1000: Verfahren
- 1010: Verfahrensschritt
- 1020: Verfahrensschritt
- 1030: Verfahrensschritt
- 1040: Verfahrensschritt
- R: Richtung

## Patentansprüche

1. Vorrichtung (10) zur Positions-, Längen- oder Winkelbestimmung, umfassend:
- einen Sendebereich (100), umfassend zumindest ein Sendeelement (101);
- einen Empfangsbereich (200), umfassend mehrere Empfangselemente (201... 232);
- einen Codierungsbereich (300), der ein Codewort (310) mit vordefinierten Abschnitten (311...320) umfasst;
- wobei der Sendebereich (100), der Empfangsbereich (200) und der Codierungsbereich (300) derart beweglich zueinander angeordnet und ausgebildet sind, dass die Empfangselemente (201...232) in Abhängigkeit von der Position des Codierungsbereichs (300) und/oder des Sendebereichs (100) zu dem Empfangsbereich (200) eine logische Eins oder eine logische Null empfangen;
- eine Auswertungseinheit (400), die ausgebildet ist, eine relative Position der Empfangselemente (201 ...232) zu erfassen und eine Abweichung der relativen Position von einer Sollposition zumindest eines der Empfangselemente (201...232) auszuwerten; und
- eine Steuereinheit (500), die ausgebildet ist, die Empfangselemente (201... 232) in Abhängigkeit von der Abweichung anzusteuern.

2. Vorrichtung (10) nach Anspruch 1,
wobei das Ansteuern der Empfangselemente (201...232) ein Abschalten zumindest eines Empfangselements (232) umfasst.

3. Vorrichtung nach einem der vorstehenden Ansprüche,
wobei das Ansteuern der Empfangselemente (201 ...232) ein Abschalten mehrerer nebeneinander angeordneter Empfangselemente (229...232) umfasst.

4. Vorrichtung nach einem der vorstehenden Ansprüche,
wobei das Ansteuern der Empfangselemente (201 ...232) ein Wechseln von einem Empfangselement (215) auf ein anderes Empfangselement (216) umfasst.

5. Vorrichtung (10) nach Anspruch 4,
wobei das Wechseln ein Wechseln von einem Empfangselement (215) auf ein benachbartes Empfangselement (216) umfasst.

6. Vorrichtung (10) nach einem der vorstehenden Ansprüche,
wobei zumindest ein Empfangselement zwei voneinander getrennte Empfangsabschnitte (220-0, 220-1) umfasst und wobei das Ansteuern der Empfangselemente (201 ...232) ein Anschalten und/oder ein Abschalten eines Empfangsabschnitts (220-0, 220-1) umfasst.

7. Vorrichtung (10) nach Anspruch 6, wobei ein erster Empfangsabschnitt (220-1) im Randbereich des Empfangselements (220) angeordnet ist.

8. Vorrichtung (10) nach Anspruch 7, wobei der erste Empfangsabschnitt (220-1) eine Empfangsfläche von 10% oder weniger von der Fläche des Empfangselements (220) umfasst.

9. Vorrichtung (10) nach Anspruch 7 oder 8, wobei der erste Empfangsabschnitt (220-1) eine im Wesentlichen dreieckige Empfangsfläche aufweist.

10. Vorrichtung (10) nach einem der vorstehenden Ansprüche,
wobei das Auswerten der Abweichung ein Auswerten einer Phase umfasst.

11. Vorrichtung (10) nach einem der vorstehenden Ansprüche,
wobei das Auswerten der Abweichung ein Auswerten einer Signalstärke umfasst.

12. Verfahren (1000) zur Positions-, Längen- oder Winkelbestimmung, umfassend die Schritte:
- Bewegen (1010) des Sendebereichs (100), des Empfangsbereichs (200) und/oder des Codierungsbereichs (300) der Vorrichtung (10) nach Anspruch 1 derart zueinander, dass die Empfangselemente (210) des Empfangsbereichs in Abhängigkeit von der Position des Codierungsbereichs (300) und/oder des Sendebereichs (100) zu dem Empfangsbereich (200) eine logische Eins oder eine logische Null empfangen;
- Erfassen (1020) einer relativen Position der Empfangselemente (210)
- Auswerten (1030) einer Abweichung der relativen Position von einer Sollposition zumindest eines der Empfangselemente (210); und
- Ansteuern (1040) der Empfangselemente (210) in Abhängigkeit von der Abweichung.

## Claims

1. An apparatus (10) for position, length or angle determination, comprising:
- a transmission region (100) comprising at least one transmission element (101);
- a reception region (200) comprising a plurality of reception elements (201 ...232);
- a coding region (300) which comprises a code word (310) with predefined sections (311...320),
- wherein the transmission region (100), the reception region (200) and the coding region (300) are arranged and formed movable relative to one another such that the reception elements (201...232) receive a logical one or a logical zero in dependence on the position of the coding region (300) and/or of the transmission region (100) relative to the reception region (200);
- an evaluation unit (400) which is configured to detect a relative position of the reception elements (201...232) and to evaluate a deviation of the relative position from a desired position of at least one of the reception elements (201...232); and
- a control unit (500) which is configured to control the reception elements (201...232) in dependence on the deviation.

2. An apparatus (10) according to claim 1,
wherein the control of the reception elements (201...232) comprises switching off at least one reception element (232).

3. An apparatus according to one of the preceding claims,
wherein the control of the reception elements (201...232) comprises switching off a plurality of reception elements (229...232) arranged next to one another.

4. An apparatus according to any one of the preceding claims,
wherein the control of the reception elements (201...232) comprises switching from one reception element (215) to another reception element (216).

5. An apparatus (10) according to claim 4,
wherein the switching comprises switching from one reception element (215) to an adjacent reception element (216).

6. An apparatus (10) according to any one of the preceding claims,
wherein at least one reception element comprises two mutually separate reception sections (220-0, 220-1) and wherein the control of the reception elements (201...232) comprises switching on and/or switching off a reception section (220-0, 220-1).

7. An apparatus (10) according to claim 6, wherein a first reception section (220-1) is arranged in the marginal region of the reception element (220).

8. An apparatus (10) according to claim 7, wherein the first reception section (220-1) comprises a reception surface of 10% or less of the area of the reception element (220).

9. An apparatus (10) according to claim 7 or 8, wherein the first reception section (220-1) has a substantially triangular reception surface.

10. An apparatus (10) according to any one of the preceding claims,
wherein the evaluation of the deviation comprises evaluating a phase.

11. An apparatus (10) according to any one of the preceding claims,
wherein the evaluation of the deviation comprises evaluating a signal strength.

12. A method (1000) for position, length or angle determination, comprising the steps:
- moving (1010) the transmission region (100), the reception region (200) and/or the coding region (300) of the apparatus (10) according to claim 1 relative to one another such that the reception elements (210) of the reception region receive a logical one or a logical zero in dependence on the position of the coding region (300) and/or the transmission region (100) relative to the reception region (200);
- detecting (1020) a relative position of the reception elements (210);
- evaluating (1030) a deviation of the relative position from a desired position of at least one of the reception elements (210); and
- controlling (1040) the reception elements (210) in dependence on the deviation.

## Revendications

1. Dispositif (10) de détermination d'une position, d'une longueur ou d'un angle, comprenant :
- une zone d'émission (100) comprenant au moins un élément d'émission (101) ;
- une zone de réception (200) comprenant plusieurs éléments de réception (201 ... 232) ;
- une zone de codage (300) comprenant un mot de code (310) ayant des sections prédéfinies (311 ... 320) ;
- la zone d'émission (100), la zone de réception (200) et la zone de codage (300) étant disposées de manière mobile les unes par rapport aux autres et étant conçues de telle sorte que les éléments de réception (201 ... 232) reçoivent un un logique ou un zéro logique en fonction de la position de la zone de codage (300) et/ou de la zone d'émission (100) par rapport à la zone de réception (200) ;
- une unité d'évaluation (400) conçue pour détecter une position relative des éléments de réception (201 ... 232) et pour évaluer un écart de la position relative par rapport à une position de consigne de l'un au moins des éléments de réception (201 ... 232) ; et
- une unité de commande (500) conçue pour commander les éléments de réception (201 ... 232) en fonction de l'écart.

2. Dispositif (10) selon la revendication 1,
dans lequel la commande des éléments de réception (201 ... 232) comprend une désactivation d'au moins un élément de réception (232).

3. Dispositif selon l'une des revendications précédentes,
dans lequel la commande des éléments de réception (201 ... 232) comprend une désactivation de plusieurs éléments de réception (229 ... 232) disposés les uns à côté des autres.

4. Dispositif selon l'une des revendications précédentes,
dans lequel la commande des éléments de réception (201 ... 232) comprend un changement d'un élément de réception (215) à un autre élément de réception (216).

5. Dispositif (10) selon la revendication 4,
dans lequel le changement comprend un changement d'un élément de réception (215) à un élément de réception voisin (216).

6. Dispositif (10) selon l'une des revendications précédentes,
dans lequel au moins un élément de réception comprend deux sections de réception (220-0, 220-1) séparées l'une de l'autre, et la commande des éléments de réception (201 ... 232) comprend une activation et/ou une désactivation d'une section de réception (220-0, 220-1).

7. Dispositif (10) selon la revendication 6,
dans lequel une première section de réception (220-1) est disposée dans la zone de bord de l'élément de réception (220).

8. Dispositif (10) selon la revendication 7,
dans lequel la première section de réception (220-1) présente une surface de réception inférieure ou égale à 10 % de la surface de l'élément de réception (220).

9. Dispositif (10) selon la revendication 7 ou 8,
dans lequel la première section de réception (220-1) présente une surface de réception sensiblement triangulaire.

10. Dispositif (10) selon l'une des revendications précédentes,
dans lequel l'évaluation de l'écart comprend l'évaluation d'une phase.

11. Dispositif (10) selon l'une des revendications précédentes,
dans lequel l'évaluation de l'écart comprend l'évaluation d'une intensité de signal.

12. Procédé (1000) de détermination d'une position, d'une longueur ou d'un angle, comprenant les étapes consistant à :
- déplacer (1010) une zone d'émission (100), une zone de réception (200) et/ou une zone de codage (300) du dispositif (10) selon la revendication 1 les unes par rapport aux autres de telle sorte que les éléments de réception (210) de la zone de réception reçoivent un un logique ou un zéro logique en fonction de la position de la zone de codage (300) et/ou de la zone d'émission (100) par rapport à la zone de réception (200) ;
- détecter (1020) une position relative des éléments de réception (210) ;
- évaluer (1030) un écart de la position relative par rapport à une position de consigne de l'un au moins des éléments de réception (210) ; et
- commander (1040) les éléments de réception (210) en fonction de l'écart.
